# EUROPEAN PATENT APPLICATION

(11) **EP 1 918 330 A1**
(43) Date of publication of application: **07.05.2008**
(21) Application number: 06797000.4
(22) Date of filing: 23.08.2006
(51) Int. Cl.: C08L 101/12, C08L 101/14, H01B 1/06, H01M 8/02, H01M 8/10

(54) **ION-CONDUCTIVE MATERIAL, SOLID POLYMER ELECTROLYTE MEMBRANE, AND FUEL BATTERY**

(30) Priority: 25.08.2005 JP 2005244184
(71) Applicant: TOYOTA JIDOSHA KABUSHIKI KAISHA, Toyota-shi Aichi 471-8571 (JP)
(72) Inventor: TSUJIKO, Akira, Toyota-shi, Aichi 471-8571 (JP)
(74) Representative: Kuhnen & Wacker
(86) International application number: PCT/JP2006/317023
(87) International publication number: WO 2007/024003

(57) **Abstract**

An ion-conductive material **characterized by** comprising an ion-conductive main component polymer and a polymer with a lower glass transition temperature (Tg) than the main component polymer, added to the main component polymer, and a solid polymer fuel cell using the ion-conductive material. As a result, the ion conductivity of a solid polymer electrolyte can be improved from the viewpoint of molecular motion.

## Description

### Technical Field

The present invention relates to an ion-conductive material having improved ion conductivity, a method for production thereof, a solid polymer electrolyte membrane and a fuel cell using the same.

### Background Art

A solid polymer electrolyte is a solid polymer material having an electrolyte group, such as a sulfonic acid group in the polymer chain, which can strongly bond to a specific ion and selectively allow positive or negative ions to permeate. Because solid polymer electrolytes have such a nature, they are formed into particles, fibers or a membrane for use in a variety of applications such as electrodialysis, diffusion dialysis, and battery separator membranes.

For example, fuel cells directly convert the chemical energy of a fuel to electrical energy and extract it through electrochemical oxidation of the fuel in the cell such as hydrogen or methanol. In recent years, fuel cells have been drawing attention as a clean source of electric energy. Solid polymer fuel cells which use a proton exchange membrane as the electrolyte are in particular being anticipated as an electricity source for electric vehicles in view of the fact that they can achieve high output density and operate at low temperatures.

A solid polymer electrolyte membrane used for a solid polymer fuel cell is required to have high ion conductivity. Therefore, a fluorinated membrane is mainly used which has a perfluoroalkylene skeleton and partly has ion-exchange groups, such as a sulfonic acid group or a carboxylic acid group, at the ends of perfluorovinyl ether side chains. Fluorine electrolyte membranes, as typified by a perfluorosulfonic acid membrane, have very high chemical stability, and are thus acclaimed as electrolyte membranes that can be used under severe conditions. Known examples of such fluorine electrolyte membranes include Nafion^{®} membrane (Du Pont), Dow membrane (Dow Chemical), Aciplex^{®} membrane (Asahi Kasei Corporation) and Flemion^{®} membrane (Asahi Glass Co., Ltd.).

In addition to fluorinated polymer electrolyte membranes typified by Nafion membrane, hydrocarbon electrolyte membranes which include a hydrocarbon as a constituent component are also known.

While conventional ion-conductive membranes possess a certain level of ion conductivity, higher-performance ion-conductive membranes are required for fuel cells.

Thus, while various novel materials such as fluorinated materials, hydrocarbon based materials and hydrocarbon- engineered plastic materials have been proposed as conventional polymer electrolyte, JP Patent Publication (Kokai) No. 2003-349245A investigates the membrane forming process.

Moreover, JP Patent Publication (Kokai) No. 2002-008440A describes adding high molecular weight polyethylene glycol to sulfonated polyarylene in order to improve the ductility of a sulfonated polyarylene membrane without damaging proton conductivity. However, the added polyethylene glycol is only directed to improving the ductility of the sulfonated polyarylene membrane. There is no description of any intention to improve the thermal or electrical properties of the sulfonated polyarylene. In the examples, the used polyethylene glycol is also a high molecular weight compound which has a high number average molecular weight of 2,000.

### Disclosure of the Invention

The role of a fuel cell electrolyte membrane is to conduct protons. If proton conductivity improves, the resistance resulting from proton conduction decreases, whereby fuel cell performance improves. While various materials have been proposed for improving proton conductivity, no substantial improvements in proton conductivity have been reported while there are attempts at improving durability and the like. Further, even in the membrane forming process described in the above-described Patent Document 1, there is no mention of a significant improvement in proton conductivity.

This is because the conventional technology has been developed overall to optimize the materials and processes, and has not been discussed from a standpoint based on molecular motion, which is the principle of proton conductivity.

Therefore, it is an object of the present invention to improve the ion conductivity of a conventional solid polymer electrolyte from the standpoint of molecular motion.

The present inventors focused on the fact that ion transportation performance improves by enhancing the molecular motion of the polymer material, thereby arriving at the present invention.

Specifically, a first aspect of the present invention is an invention of an ion-conductive material, characterized by comprising an ion-conductive main component polymer and a polymer with a lower glass transition temperature (Tg) than the main component polymer, added to the main component polymer. By adding to an ion-conductive electrolyte (A) a small amount of a polymer (B) with a lower glass transition temperature (Tg) than (A), the transportation of ions is enhanced due to the thermal motion of (B) in (A), whereby the material (A)+(B) exhibits a dramatically higher ion conductivity compared with (A) by itself.

Although from the standpoint of improving ion conductivity the Tg of the added polymer (B) is preferably as low as possible, the Tg is appropriately defined according to additional factors pertaining to use, such as mechanical strength. Thus, the glass transition temperature (Tg) of the added polymer is preferably at least 50°C lower, and more preferably at least 70°C lower, than the main component polymer. Further, to increase miscibility with the main component polymer, which is an electrolyte, the added polymer is preferably a water-soluble polymer.

Although the added amount of the added polymer may be selected from a broad range, if the added amount is low there is little improvement in ion transportability due to thermal motion, and if the added amount is high, the ion conductivity of the main component polymer as well as various physical properties such as heat resistance deteriorate, which is not preferable. Thus, the weight ratio of the main component polymer to the added polymer is preferably 99:1 to 80:20, and more preferably 95:5 to 80:20.

As the above-described main component polymer, various ion-conductive polymers known in the art may be widely employed. Further, as for the polymer added to the main component polymer as well, a wide variety may be employed so long as the polymer has a glass transition temperature (Tg) lower than the main component polymer. Preferred examples thereamong include the combination of a perfluorosulfonic acid polymer as the main component polymer and polyethylene glycol (PEG) having a number average molecular weight of less than 3,000, and preferably 2,000 or less, as the added polymer.

A second aspect of the present invention is a solid polymer electrolyte membrane comprising one or more of the above-described ion-conductive materials. The polymer electrolyte membrane according to the present invention has dramatically improved proton conductivity compared with when the main component polymer is used by itself. Here, there are no restrictions on the method for forming a membrane from the ion-conductive material. The membrane may be formed by mixing a powder of the ion-conductive material according to the present invention with a suitable binder. Common methods which can be employed include a casting method of casting a solution on a flat sheet, a method of coating a solution on a flat sheet by a die coater, a comma coater and the like, and a method of drawing molten ion-conductive material.

A third aspect of the present invention is a fuel cell using one or more of the above-described ion-conductive materials. Specifically, a solid polymer fuel cell is provided which has a membrane-electrode assembly (MEA) composed of a polymer solid electrolyte membrane (a) and a gas diffusion electrode (b), which is bonded to this electrolyte membrane and has as its main constituent material an electrode catalyst composed of a conductive carrier supporting a catalytic metal and a proton exchange material, wherein the polymer solid electrolyte membrane and/or the proton exchange material are composed of the above-described ion-conductive material or the above-described solid polymer electrolyte membrane.

A fourth aspect of the present invention is the invention of a method for improving the ion-conductivity of an ion-conductive polymer, characterized by adding to an ion-conductive main component polymer a polymer with a lower glass transition temperature (Tg) than the main component polymer.

As described above, in the method for improving ion-conductivity according to the present invention, the glass transition temperature (Tg) of the added polymer is preferably at least 50°C, and more preferably at least 70°C, lower than the main component polymer; the weight ratio of the main component polymer to the added polymer is preferably 99:1 to 80:20, and more preferably 95:5 to 80:20; and the combination of the main component polymer and the added polymer is preferably the combination of a perfluorosulfonic acid polymer and polyethylene glycol (PEG) having a number average molecular weight of less than 3,000, and preferably 2,000 or less.

A conventional solid electrolyte membrane, such as a perfluorosulfonic acid membrane, only conducts ions by a chemical reaction with an ion-exchange group such as a sulfonic acid group. In contrast, in the present invention, by adding to an ion-conductive main component polymer a polymer with a lower glass transition temperature (Tg) than the main component polymer, the transportation of ions is enhanced due to the thermal motion of the polymer added to the ion-conductive main component polymer, whereby a dramatically higher ion conductivity is provided.

Thus, the present invention enables the ion conductivity of a conventional solid polymer electrolyte membrane to be improved from the standpoint of molecular motion.

### Brief Description of the Drawings

Figure 1 shows the Tg of the added polymer and the proton conductivity of the mixed material for a sample having a Nafion to added polymer weight ratio of 95:5; and
Figure 2 shows the Tg of the added polymer and the proton conductivity of the mixed material for a sample having a Nafion to added polymer weight ratio of 80:20.

### Best Mode for Carrying Out the Invention

The present invention will now be described in more detail by referring to the following examples.

Added polymers having a different Tg were mixed in Nafion^{™}. Proton conductivity was measured in an air atmosphere.

### [Measurement of proton conductivity]

A sample sandwiched between platinum electrodes was placed in a constant-temperature furnace controlled to 100°C. Proton conductivity at a frequency of 0.1 to 1,000 kHz and an applied voltage of 10 mV was measured using a frequency response analyzer (manufactured by NF Electronic Instruments).

### [Measurement of glass transition temperature (Tg)]

The glass measurement temperature was measured using a commercially-available differential scanning calorimeter (DSC) manufactured by Seiko Instruments Inc.

### [Sample fabrication]

As for the added polymers, commercially-available polyethylene glycol (PEG: number average molecular weight of 380 to 420, Tg = -9°C, manufactured by Merck), polyethylene glycol (PEG: number average molecular weight of 950 to 1,050, Tg = 40°C, manufactured by Merck), polyvinyl alcohol (PVA: number average molecular weight of 450 to 550, Tg = 200°C, manufactured by Merck), polyacrylamide (number average molecular weight of about 1,500, Tg = 150°C, manufactured by Aldrich) and polyacrylic acid (Tg = 106°C), were dissolved in pure water, and the resultant mixtures were then stirred to obtain uniform solutions having a weight content of 20% by weight. Here, the polyvinyl alcohol (PVA) and the polyacrylamide are the comparative examples of the present invention.

These solutions were mixed in the following ratios with a commercially-available 20% by weight solution of Nafion (EW = 1,000, manufactured by Aldrich). The resultant mixtures were stirred for 2 hours to obtain uniform, mixed solutions. The obtained solutions were coated on Teflon sheets, which were then dried for 1 week in a petri dish with the lid closed to obtain films. The thickness of the obtained films was measured using a micrometer, and the proton conductivity was evaluated.

### [Example 1]

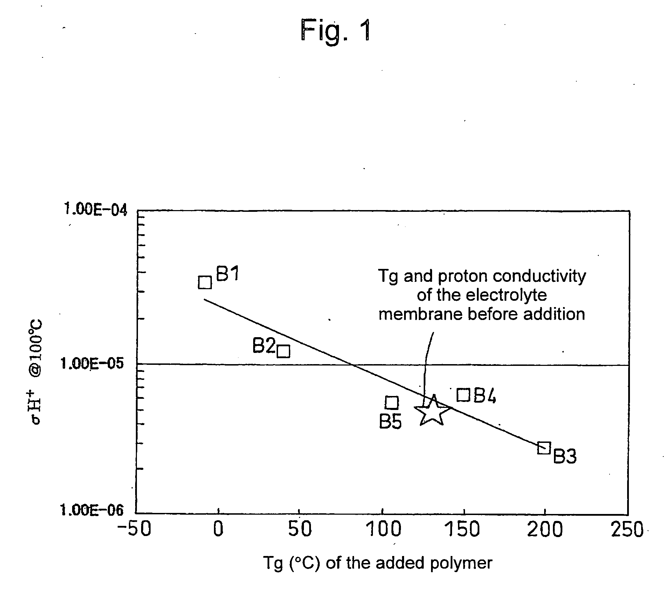

Samples were prepared according to the above-described procedures so that the Nafion to added polymer weight ratio was 95:5. The Tg of the added polymer and the proton conductivity of the mixed material are shown in Figure 1. In Figure 1, polyethylene glycol (PEG: number average molecular weight of 380 to 420, Tg = -9°C, manufactured by Merck) is indicated by B1, polyethylene glycol (PEG: number average molecular weight of 950 to 1,050, Tg = 40°C, manufactured by Merck) is indicated by B2, polyvinyl alcohol (PVA: number average molecular weight of 450 to 550, Tg = 200°C, manufactured by Merck) is indicated by B3, polyacrylamide (number average molecular weight of about 1,500, Tg = 150°C, manufactured by Aldrich) is indicated by B4 and polyacrylic acid (Tg = 106°C) is indicated by B5.

### [Example 2]

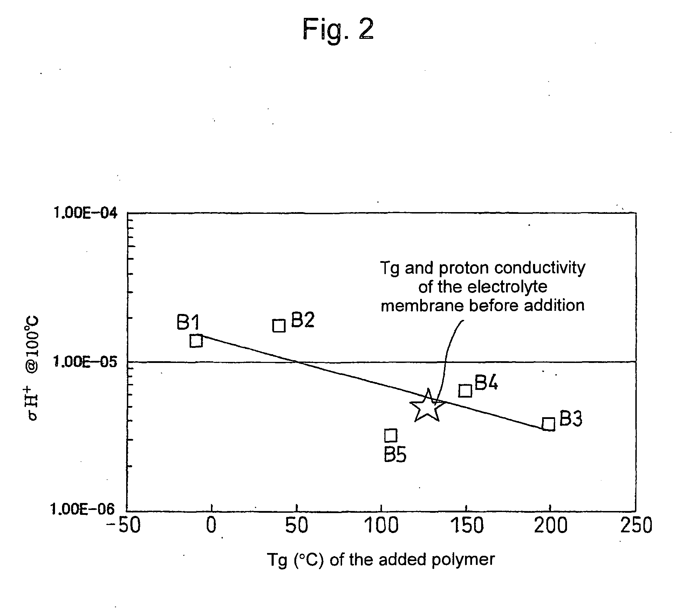

Samples were prepared according to the above-described procedures so that the Nafion to added polymer weight ratio was 80:20. The Tg of the added polymer and the proton conductivity of the mixed material are shown in Figure 2. The same as in Example 1, polyethylene glycol (PEG: number average molecular weight of 380 to 420, Tg = -9°C, manufactured by Merck) is indicated by B1, polyethylene glycol (PEG: number average molecular weight of 950 to 1,050, Tg = 40°C, manufactured by Merck) is indicated by B2, polyvinyl alcohol (PVA: number average molecular weight of 450 to 550, Tg = 200°C, manufactured by Merck) is indicated by B3, polyacrylamide (number average molecular weight of about 1,500, Tg = 150°C, manufactured by Aldrich) is indicated by B4 and polyacrylic acid (Tg = 106°C) is indicated by B5.

From the results of Figures 1 and 2, it can be seen that there is a strong correlation between the Tg of the added polymer and the proton conductivity of the mixed material. Specifically, it can be seen that when the added polymer has a Tg which is greater than the Tg of Nafion, the proton conductivity deteriorates as a result of smaller molecular motion, while when the added polymer has a Tg which is smaller than the Tg of Nafion, the proton conductivity improves as a result of greater molecular motion.

### Industrial Applicability

The ion conductivity of a conventional solid polymer electrolyte membrane can be improved from the standpoint of molecular motion through a comparatively easy operation of adding to an ion-conductive main component a polymer with a lower glass transition temperature (Tg) than the main component polymer. Thus, the present invention can be widely used in fuel cells, water electrolysis, hydrohalic acid electrolysis, brine electrolysis, oxygen concentrators, humidity sensors, gas sensors and the like, which use various solid polymer electrolyte membranes. Power generation performance can be especially improved by using in a fuel cell, thereby contributing to the practical use and spread of fuel cells.

## Claims

1. An ion-conductive material **characterized by** comprising an ion-conductive main component polymer and a polymer with a lower glass transition temperature (Tg) than the main component polymer, added to the main component polymer.

2. The ion-conductive material according to claim 1, **characterized in that** the added polymer has a glass transition temperature (Tg) which is at least 50°C lower than the main component polymer.

3. The ion-conductive material according to claim 1 or 2, **characterized in that** the added polymer is a water-soluble polymer.

4. The ion-conductive material according to any of claims 1 to 3, **characterized in that** the weight ratio of the main component polymer to the added polymer is 99:1 to 80:20.

5. The ion-conductive material according to any of claims 1 to 4, **characterized in that** the main component polymer is a perfluorosulfonic acid polymer and the added polymer is polyethylene glycol (PEG) having a number average molecular weight of less than 3,000.

6. A solid polymer electrolyte membrane comprising one or more of the ion-conductive materials according to any of claims 1 to 5.

7. A fuel cell using one or more of the ion-conductive materials according to any of claims 1 to 5.

8. A method for improving ion-conductivity, **characterized by** adding to an ion-conductive main component polymer a polymer with a lower glass transition temperature (Tg) than the main component polymer.

9. The method for improving ion-conductivity according to claim 8, **characterized in that** the added polymer has a glass transition temperature (Tg) which is at least 50°C lower than the main component polymer.

10. The method for improving ion-conductivity according to claim 8 or 9, **characterized in that** the added polymer is a water-soluble polymer.

11. The method for improving ion-conductivity according to any of claims 8 to 10, **characterized in that** the weight ratio of the main component polymer to the added polymer is 99:1 to 80:20.

12. The method for improving ion-conductivity according to any of claims 8 to 11, **characterized in that** the main component polymer is a perfluorosulfonic acid polymer and the added polymer is polyethylene glycol (PEG) having a number average molecular weight of less than 3,000.
